# EUROPEAN PATENT APPLICATION

(11) **EP 4 646 027 A1**
(43) Date of publication of application: **05.11.2025**
(21) Application number: 23911616.3
(22) Date of filing: 08.12.2023
(51) Int. Cl.: H05B 3/20, A47C 7/74, B62D 1/06, H05B 3/10

(54) **PLANAR UNIT EQUIPPED WITH LINEAR BODY, STEERING WHEEL, AND PLANAR UNIT MANUFACTURING METHOD**

(30) Priority: 26.12.2022 JP 2022208899
(71) Applicant: Kurabe Industrial Co., Ltd., Hamamatsu-shi, Shizouka 432-8521 (JP)
(72) Inventor: WADA, Akifumi, Hamamatsu-shi, Shizuoka 432-8521 (JP); TERADA, Kosuke, Hamamatsu-shi, Shizuoka 432-8521 (JP)
(74) Representative: Pfenning, Meinig & Partner mbB
(86) International application number: PCT/JP2023/043928
(87) International publication number: WO 2024/142835

(57) **Abstract**

A planar unit that can prevent a user from feeling a sense of discomfort during an operation and the like and that can include a plurality of functions is provided. A planar unit (1) includes a base material (31), a first linear body **(11)** to be arranged on one surface of the base material (31), and a second linear body (21) to be arranged on another surface of the base material (31), the first linear body **(11)** being one of a heater wire, a sensor wire, or a shield wire, and the second linear body (21) being one of a heater wire, a sensor wire, or a shield wire, in which the base material (31) and the first linear body **(11)** are coupled to each other by a sewing thread, and a thermal fusion bonding part (29) is formed on an outermost layer of the second linear body (21) and the base material (31) and the second linear body (21) are thermally fused together. A steering wheel includes the above planar unit (1), a wheel core material, and a covering material, in which the planar unit (1) is installed between the wheel core material and the covering material.

## Description

### Technical Field

The present invention relates to a planar unit including a heater unit for heating a wheel part of a steering wheel used in, for example, an automobile or a vessel and a sensor unit for temperature detection or grasp detection of the steering wheel and, in particular, to a planar unit that prevents a user from feeling a sense of discomfort during a steering operation and the like and that provides a plurality of functions.

### Background Art

Conventionally, mounting a heater unit to a wheel part of a steering wheel in order to warm the hands of a driver during cold season has been proposed. A steering wheel is made up of a wheel part, a spoke part, and a boss part and the wheel part is formed of a wheel core material created by covering a metallic core with a urethane resin or the like and a covering material made of a synthetic resin, a fibrous product, leather, or the like. The heater unit is installed between the wheel core material and the covering material and is fed power by being connected to a lead routed through the spoke part and the boss part.

As the heater unit installed in the steering wheel, for example, a heater unit in which a heater wire is arranged in a predetermined pattern shape on a base material as shown in Patent Literature 1 to 4 is known. In this case, various foamed resin sheets, foamed rubber sheets, rubber sheets, nonwoven fabric, woven fabric, and the like are being disclosed as the base material. In addition, examples of related techniques include Patent Literature 5-8 and the like.

Examples of the sensor unit include those that function as a capacitance sensor or a temperature sensor. A capacitance sensor is used in a touch panel, a seat occupancy sensor, and the like and, in particular, a so-called two-electrode-type capacitance sensor is widely used in various applications due to its superior detection sensitivity. The two-electrode-type capacitance sensor takes advantage of the fact that, when a human body approaches two electrodes being insulated in a state of proximity, a capacitance value between the two electrodes changes, and detects a change in the capacitance. Such a technique is being considered for, for example, grasp detection of a steering wheel. An example of a sensor unit constituted of a linear capacitance sensor is described in Patent Literature 9 and the like. Known examples of temperature sensors include those used as temperature sensing means of a warming tool such as an electrically-heated carpet and an electric blanket. These examples adopt a structure in which a sensor wire is wound around a central core wire and an outer circumference of the sensor wire is covered by a sheath, and temperature detection is performed by detecting a change in a resistance value due to a temperature of the sensor wire. Examples of use of the sensor wire include arranging the sensor wire in a vicinity of a heat generation source such as a heater wire to detect a temperature of the heater wire and arranging the sensor wire in a serpentine shape to detect a temperature as a plane. An example of a sensor unit constituted of a linear temperature sensor is described in Patent Literature 10 and the like.

### Citation List

### Patent Literature

[Patent Literature 1] Japanese Patent No. 4202071: Kurabe Industrial Co., Ltd.
[Patent Literature 2] International Patent Publication No. WO 2014/104000: Toyoda Gosei Co., Ltd., Kurabe Industrial Co., Ltd.
[Patent Literature 3] Japanese Patent No. 6468701: Kurabe Industrial Co., Ltd.
[Patent Literature 4] Japanese Patent No. 6760941: Kurabe Industrial Co., Ltd.
[Patent Literature 5] Japanese Patent No. 3991750: Matsushita Electric Industrial Co., Ltd.
[Patent Literature 6] Japanese Patent No. 671727: Kurabe Industrial Co., Ltd.
[Patent Literature 7] Japanese Patent No. 671728: Kurabe Industrial Co., Ltd.
[Patent Literature 8] Japanese Patent No. 6829577: Kurabe Industrial Co., Ltd.
[Patent Literature 9] Japanese Patent No. 6851730: Kurabe Industrial Co., Ltd.
[Patent Literature 10] Japanese Patent No. 5562678: Kurabe Industrial Co., Ltd.

### Summary of Invention

It has been required, in a market, that one member have a plurality of functions. For example, in the above heater unit as well, it may be required to configure circuits of a plurality of heater wires in one base material to change heat generation characteristics, or to arrange a heater wire and a sensor wire in one base material so that this base material has functions of both the heater and the sensor. On the other hand, when a heater wire(s) and a sensor wire are arranged in such a way that they overlap each other, the thickness of this part increases, which causes a situation in which a user experiences a sense of discomfort during a steering operation and the like. There is also a risk that a large force is applied to this overlapped part and a disconnection occurs. Therefore, it has been difficult to arrange a plurality of heater wires and a sensor wire on only one surface of the base material due to space limitations. In order to solve this problem, it is conceivable to use both surfaces of the base material to make a pattern of a heater wire on one surface different from a pattern of another heater wire on the other surface, or to arrange a heater wire on one surface and a sensor wire on the other surface.

The heater units disclosed in Patent Literature 1-4 are configured such that a heater wire is arranged in a predetermined pattern shape on a base material and glued and fixed. A manufacturing method thereof is as follows. First, a hot press jig provided with a mechanism including a plurality of locking members that are movable upward and downward is used to arrange the heater wire in a predetermined pattern shape while hooking the heater wire to the plurality of locking members. Next, a base material is arranged on the heater wire. A press hot plate is lowered to subject the heater wire and the base material to heat and pressure to glue and fix the heater wire and the base material. With this configuration, a thickness of a location in the base material where a heater wire is arranged is made thin so as to follow a shape of the heater wire, and accordingly, a flat shape is created. With such a configuration, it is difficult to arrange heater wires on both surfaces of the base material. This is because, since the base material is already compressed at the stage where a heater wire is arranged on one surface, even when an attempt to arrange a heater wire is made, there is little room for the base material to be compressed and the heater unit will not be flat.

The heater units disclosed in Patent Literature 6-8 solve the aforementioned problem, and are provided by bonding base materials on which heater wires are arranged so that heater wires are arranged on both surfaces. In this case, however, another process of bonding the base materials is required, and since two base materials are required, the cost increases. In addition, it becomes necessary to consider adhesion between the base materials.

On the other hand, the heater unit disclosed in Patent Literature 5 involves using a machine such as a sewing machine for stitching to stitch a heater wire to a base material with a sewing thread made of a needle thread and a bobbin thread. In such a heater unit, the heater wire is fixed to the base material solely by the sewing thread. In order to cause heater wires to be fixed to both surfaces of the base material by this method, after a heater wire is stitched to one surface, another heater wire is stitched to the other surface. In this case, it is possible that, when the heater wire is stitched in a subsequent process, a sewing needle may touch the heater wire that is already fixed, which may cause the heater wire to be disconnected. This problem is more noticeable when the pattern shape becomes fine in order to improve heater performance.

A similar problem arises in a planar sensor unit in which a linear sensor wire is arranged on a base material as shown in Patent Literature 9 and 10.

The present invention has been made in order to solve such problems in related art and an object thereof is to provide a planar unit that can prevent a user from feeling a sense of discomfort during a steering operation and the like and that can include a plurality of functions.

In order to achieve the object described above, a planar unit according to the present invention includes a base material, a first linear body to be arranged on one surface of the base material, and a second linear body to be arranged on another surface of the base material, the first linear body being one of a heater wire, a sensor wire, or a shield wire, and the second linear body being one of a heater wire, a sensor wire, or a shield wire, in which the base material and the first linear body are coupled to each other by a sewing thread, and a thermal fusion bonding part is formed on an outermost layer of the second linear body and the base material and the second linear body are thermally fused together.

In addition, a thermal fusion bonding part may be formed on an outermost layer of the first linear body, and the sewing thread may be inserted into the thermal fusion bonding part of the first linear body.

In addition, a thickness of locations in the base material where the first linear body and the second linear body are arranged may be made thin so as to follow shapes of the first linear body and the second linear body, and the sewing thread may be inserted into the thermal fusion bonding part of the first linear body and have a basically flat shape.

In addition, a thermal fusion bonding part may be formed on an outermost layer of the first linear body, the planar unit may include a sewing thread mark created by melting of the sewing thread that couples the first linear body and the base material to each other, and the thermal fusion bonding part of the first linear body and the sewing thread mark may be planarized.

In addition, a thickness of locations in the base material where the first linear body and the second linear body are arranged may be made thin so as to follow shapes of the first linear body and the second linear body, and the thermal fusion bonding part of the first linear body and the sewing thread mark may be planarized and have a basically flat shape.

Furthermore, a steering wheel according to the present invention includes the above planar unit, a wheel core material, and a covering material, in which the planar unit is installed between the wheel core material and the covering material.

In a method of manufacturing a planar unit according to the present invention, a first linear body is one of a heater wire, a sensor wire, or a shield wire, and a second linear body is one of a heater wire, a sensor wire, or a shield wire, and the method includes fixing the first linear body onto one surface of a base material by a sewing thread, arranging the second linear body including an outermost layer on which a thermal fusion bonding part is formed on another surface of the base material in a predetermined pattern shape, and applying heat and pressure to the base material, the first linear body, and the second linear body to make a thickness of locations in the base material where the first linear body and the second linear body are arranged so as to follow shapes of the first linear body and the second linear body and fix the base material and the second linear body to each other with the thermal fusion bonding part.

In addition, the first linear body may include an outermost layer on which a thermal fusion bonding part is formed, and the above method may include causing, when heat and pressure are applied to the first linear body and the second linear body, the sewing thread to be inserted into the thermal fusion bonding part of the first linear body to give the sewing thread a basically flat shape, and fixing the base material and the second linear body to each other with the thermal fusion bonding part.

In addition, the first linear body may include an outermost layer on which a thermal fusion bonding part is formed, and the above method may include melting, when heat and pressure are applied to the first linear body and the second linear body, the sewing thread and the thermal fusion bonding part, planarizing a sewing thread mark created by melting of the sewing thread and the thermal fusion bonding part to give the sewing thread mark and the thermal fusion bonding part a basically flat shape, and fixing the base material and the first linear body to each other with the thermal fusion bonding part.

According to the present invention, by combining sewing and application of heat and pressure when a linear body is arranged in a base material, a planar unit that is flat even after linear bodies are arranged on both respective surfaces of the base material can be obtained. It is therefore possible to provide a planar unit that can prevent a user from feeling a sense of discomfort during a steering operation and the like and that can include a plurality of functions.

### Brief Description of Drawings

Fig. 1 is a plan view showing a configuration of one surface of a planar unit according to the present invention;
Fig. 2 is a plan view showing a configuration of another surface of the planar unit according to the present invention;
Fig. 3 is a sectional view schematically showing an enlarged view of a main part of the planar unit according to a first embodiment of the present invention;
Fig. 4 is a sectional view schematically showing, enlarged, a main part at a midway stage of manufacturing in a planar unit according to an embodiment of the present invention;
Fig. 5 is a diagram showing an embodiment of the present invention being a diagram showing a configuration of a hot press-type heater manufacturing apparatus;
Fig. 6 is a partial perspective view showing a situation where a linear body is arranged in a predetermined pattern shape in a heater unit according to the present invention;
Fig. 7 is a sectional photograph of a main part of the planar unit according to the first embodiment of the present invention;
Fig. 8 is a sectional photograph of a main part of a planar unit according to a second embodiment of the present invention;
Fig. 9 is a partially cutaway side view showing one example of a heater wire used in the present invention;
Fig. 10 is a partially cutaway side view showing one example of the heater wire used in the present invention;
Fig. 11 is a partially cutaway side view showing one example of the heater wire used in the present invention;
Fig. 12 is a partially cutaway side view showing one example of the heater wire used in the present invention;
Fig. 13 is a partially cutaway side view showing one example of the heater wire used in the present invention;
Fig. 14 is a partially cutaway side view showing one example of the heater wire used in the present invention;
Fig. 15 is a partially cutaway side view showing one example of the heater wire used in the present invention;
Fig. 16 is a partially cutaway side view showing one example of a sensor wire used in the present invention;
Fig. 17 is a partially cutaway side view showing one example of the sensor wire used in the present invention;
Fig. 18 is a partially cutaway perspective view showing a situation where the planar unit according to the present invention is embedded in a steering wheel; and
Fig. 19 is a partially cutaway perspective view showing a situation where the planar unit according to the present invention is embedded in a vehicular seat.

### Description of Embodiments

Hereinafter, embodiments of the present invention will be described with reference to the drawings. The embodiments represent examples which assume that a heater wire is to be used as a first linear body, a sensor wire is to be used as a second linear body, and the planar unit according to the present invention is to be applied to a vehicular steering heater.

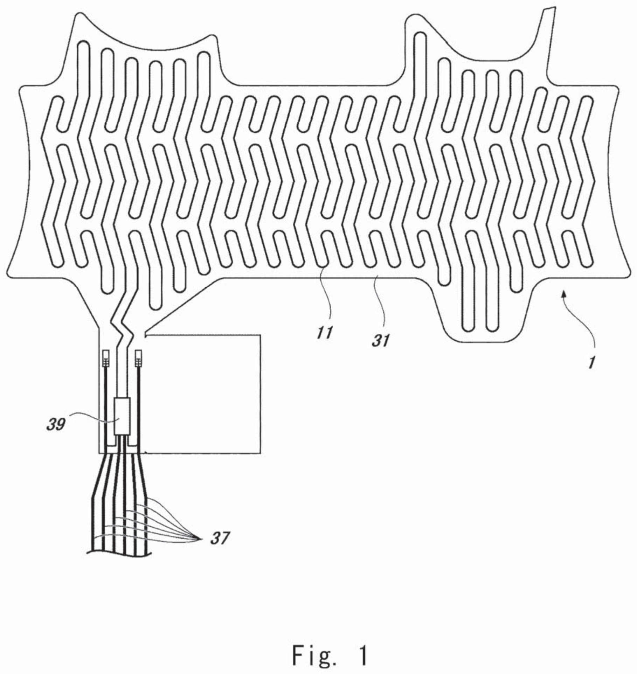

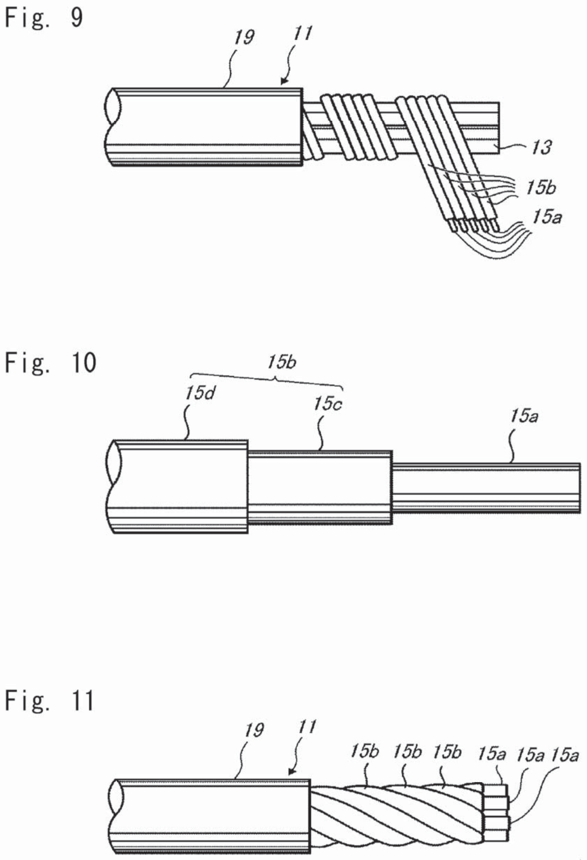

First, a first embodiment will be described with reference to Figs. 1-3. A configuration of a first linear body, which is, a heater wire 11, according to this first embodiment will now be described. The heater wire 11 according to the first embodiment is configured as shown in Figs. 9 and 10. First, a core wire 13 is formed of an aromatic polyamide fiber bundle with an outer diameter of approximately 0.2 mm. Five paralleled conductor strands 15a made of a copper alloy wire with a strand diameter of 0.08 mm and containing hard tin are spirally wound around an outer circumference of the core wire 13 at a pitch of approximately 1.0 mm. As shown in Figs. 9 and 10, an insulating film 15b is formed around the conductor strands 15a. The insulating film 15b is formed of an inner layer 15c made of a polyurethane resin and an outer layer 15d made of a polyamide-imide resin. The inner layer 15c of the insulating film 15b was formed so as to become a layer with a thickness of 4 µm by applying a polyurethane varnish around the conductor strands 15a and drying the polyurethane varnish. Next, the outer layer 15d was formed so as to become a layer with a thickness of 4 µm by applying a polyamide-imide varnish on an outer circumference of the inner layer 15c and drying the polyamide-imide varnish. The outer circumference of the core wire 13 around which the conductor strands 15a are wound is coated with an insulating film. The insulating film is formed by extrusion coating so that a polyethylene resin blended with a flame retardant assumes a thickness of 0.2 mm. In the present embodiment, the polyethylene resin of the insulating film functions as a thermal fusion bonding part 19. A finished outer diameter of the heater wire 11 configured as described above is 0.8 mm. The core wire 13 is effective in terms of enhanced flexibility and tensile strength. It is also possible to parallel or strand a plurality of conductor strands without using the core wire 13.

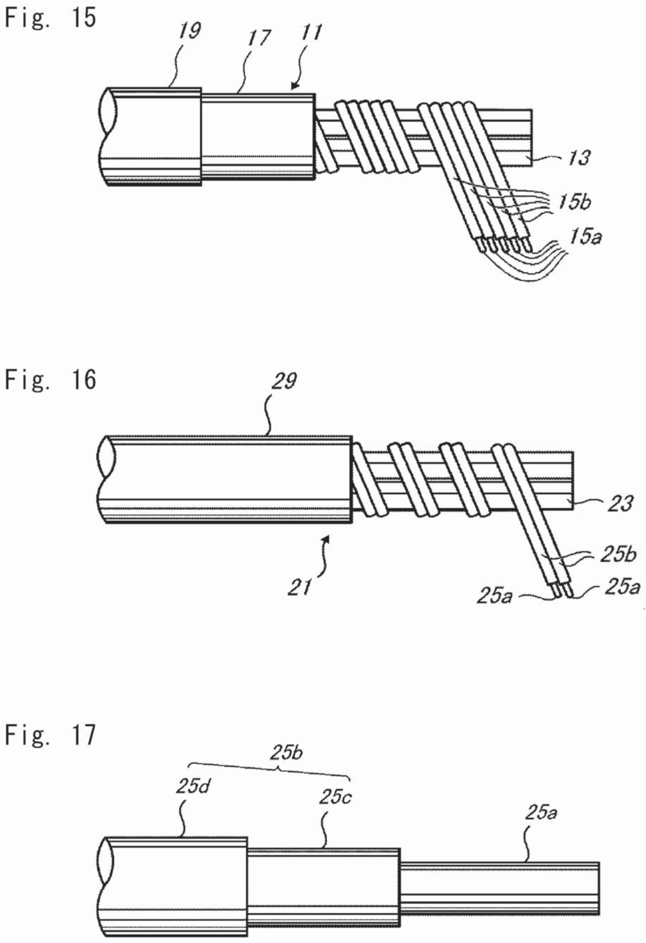

Next, a configuration of a second linear body, which is, a sensor wire 21, according to the first embodiment will be described. The sensor wire 21 according to the first embodiment is configured as shown in Figs. 16 and 17. First, a core wire 23 is formed of an aromatic polyamide fiber bundle with an outer diameter of approximately 0.2 mm. Two paralleled conductor strands 25a made of a copper alloy wire with a strand diameter of 0.08 mm and containing hard tin are spirally wound around an outer circumference of the core wire 23 at a pitch of approximately 1.0 mm. As shown in Figs. 16 and 17, an insulating film 25b is formed around the conductor strands 25a. The insulating film 25b is formed of an inner layer 25c made of a polyurethane resin and an outer layer 25d made of a polyamide-imide resin. The inner layer 25c of the insulating film 25b was formed so as to become a layer with a thickness of 4 µm by applying a polyurethane varnish around the conductor strands 25a and drying the polyurethane varnish. Next, the outer layer 25d was formed so as to become a layer with a thickness of 4 µm by applying a polyamide-imide varnish on an outer circumference of the inner layer 25c and drying the polyamide-imide varnish. The outer circumference of the core wire 23 around which the conductor strands 25a are wound is coated with an insulating film. The insulating film is formed by extrusion coating so that a polyethylene resin blended with a flame retardant assumes a thickness of 0.2 mm. In the present embodiment, the polyethylene resin of the insulating film functions as a thermal fusion bonding part 29. A finished outer diameter of the sensor wire 21 configured as described above is 0.8 mm. This sensor wire 21 detects a capacitance value between the two conductor strands 25a.

Next, a configuration of a base material 31 in which the heater wire 11 and the sensor wire 21 configured as described above are arranged will be described. The base material 31 according to the first embodiment is made of a foamed polyurethane resin with an apparent density of 40 kg/m3 (in conformity to JIS K 7222), a hardness of 220 N (in conformity to JIS K 6400), and a thickness of 8 mm. The base material 31 is made into a desired shape by a known method such as die cutting.

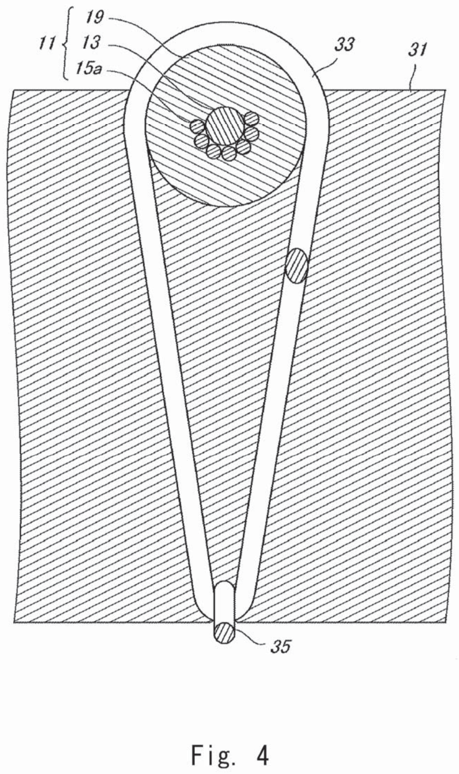

Next, a configuration in which the heater wire 11 described above is arranged on one surface of the base material 31 in a predetermined pattern shape will be described. The base material 31 is arranged on a movable table and the heater wire 11 is arranged on a heater wire supplying machine installed along with a sewing machine for stitching. The heater wire 11 is supplied to immediately in front of a needle bar unit of the sewing machine for stitching, the movable table moves in a predetermined pattern in synchronization therewith and, at the same time, the heater wire 11 is stitched to the base material 31 by the sewing machine for stitching. In this manner, the heater wire 11 is arranged on the base material 31 in a serpentine shape. Fig. 4 is a sectional view showing, enlarged, a main part of a planar unit 1 in a state where the heater wire 11 has been stitched onto a surface of the base material 31. A sewing thread is made up of a needle thread 33 and a bobbin thread 35. The needle thread 33 envelops the heater wire 11 approximately around an entire circumference of the heater wire 11 and is entwined with the bobbin thread 35 and stitched onto the base material 31 on a rear side. The needle thread 33 is a 165-dtex polyester filament yarn and the bobbin thread 35 is a 165-dtex polyester filament yarn. A stitching pitch is set to 2 mm in a linear portion of the serpentine shape and to 1 mm in a curved portion of the serpentine shape.

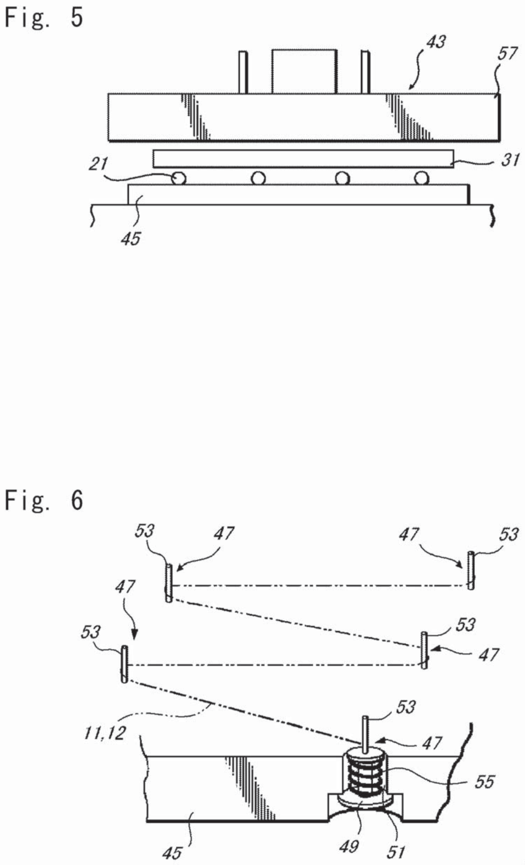

Next, a configuration in which the sensor wire 21 described above is arranged on another surface of the base material 31 in a predetermined pattern shape to be bonded and fixed will be described. Fig. 5 is a diagram showing a configuration of a hot press-type heater manufacturing apparatus 43 for bonding and fixing the sensor wire 21 onto the base material 31. First, a hot press jig 45 will be described. A plurality of locking mechanisms 47 are arranged on an upper surface of the hot press jig 45. As shown in Fig. 6, the above locking mechanisms 47 each include a pin 49, and this pin 49 is inserted into a hole drilled in the hot press jig 45 from the bottom of the hole toward the top of the hole. A locking member 53 is attached to the upper surface of this pin 49 in such a way that the locking member 53 can move in the axial direction of the pin 49, and the locking member 53 is constantly biased upward by a coil spring 55. In addition, as shown by a virtual line in Fig. 6, the sensor wire 21 is arranged in a predetermined pattern shape corresponding to the positions of the locking members 53 while the sensor wire 21 is engaged in the locking members 53 on the upper surfaces of the plurality of respective locking mechanisms 47.

Referring once again to Fig. 5, a press hot plate 57 is arranged above the above-described plurality of locking mechanisms 47 in such a manner that the press hot plate 57 can ascend and descend. First, the sensor wire 21 is arranged so as to draw a predetermined pattern shape while being hooked by the locking members 53 of the plurality of locking mechanisms 47. Next, the base material 31 is placed onto the sensor wire 21 in such a manner that the surface of the base material 31 on which the heater wire 11 is not arranged faces the sensor wire 21. In this state, the press hot plate 57 descends and presses the base material 31 against the sensor wire 21. At this point, for example, the press hot plate 57 applies heat and pressure of 230°C/5 seconds to the base material 31 and the sensor wire 21. Then the thermal fusion bonding part 19 of the heater wire 11 and thermal fusion-bondable fibers of the base material 31, and the thermal fusion bonding part 29 of the sensor wire 21 and thermal fusion-bondable fibers of the base material 31 are both subjected to the heat and pressure and are fusion-bonded to each other. As a result, the heater wire 11, the sensor wire 21, and the base material 31 are bonded and fixed to each other. In doing so, the hot press jig 45 may also be heated.

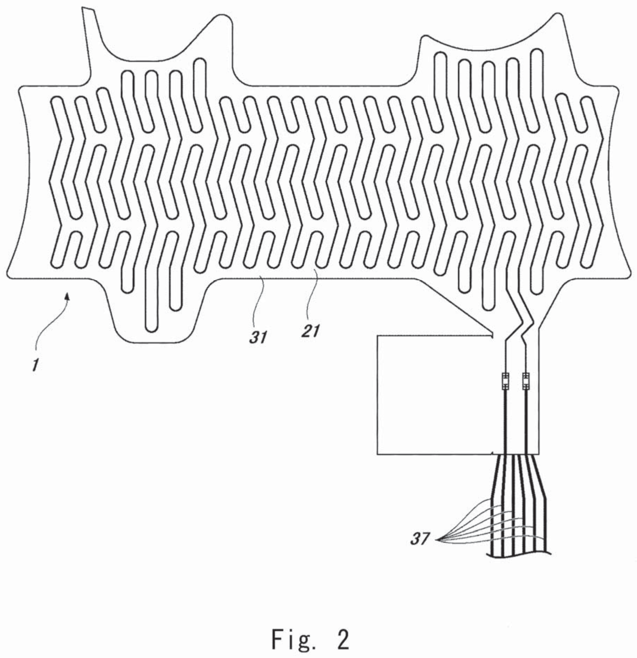

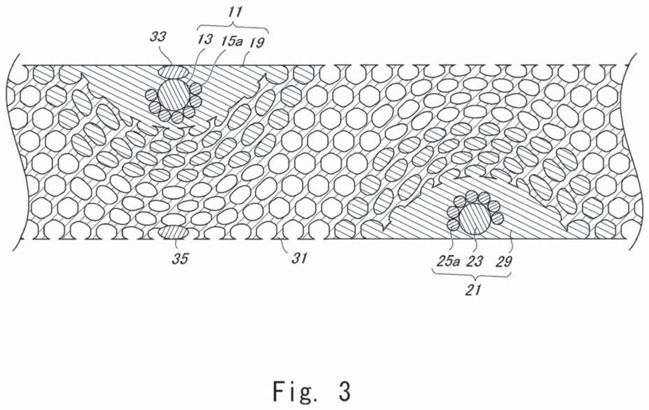

By performing the operations described above, the planar unit 1 similar to that shown in Figs. 1-3 can be obtained. Note that Fig. 2 is a plan view showing a surface opposite to that shown in Fig. 1, and Fig. 3 is a sectional view showing an enlarged view of a main part of Fig. 1. Since the base material 31 is to be compressed by the press hot plate 57, locations where the heater wire 11 and the sensor wire 21 are arranged are to be subjected to higher pressure. Accordingly, the locations in the base material 31 where the heater wire 11 and the sensor wire 21 are arranged are given a higher density and become thinner than other locations while assuming shapes that follow shapes of the heater wire 11 and the sensor wire 21. Accordingly, surfaces in the planar unit 1 on which the heater wire 11 and the sensor wire 21 are arranged each assume a flat shape without irregularities even in the locations where the heater wire 11 and the sensor wire 21 are arranged. In addition, since the base material 31 is compressed and has a high density in the planar unit 1 obtained in this manner, mechanical strength can be increased.

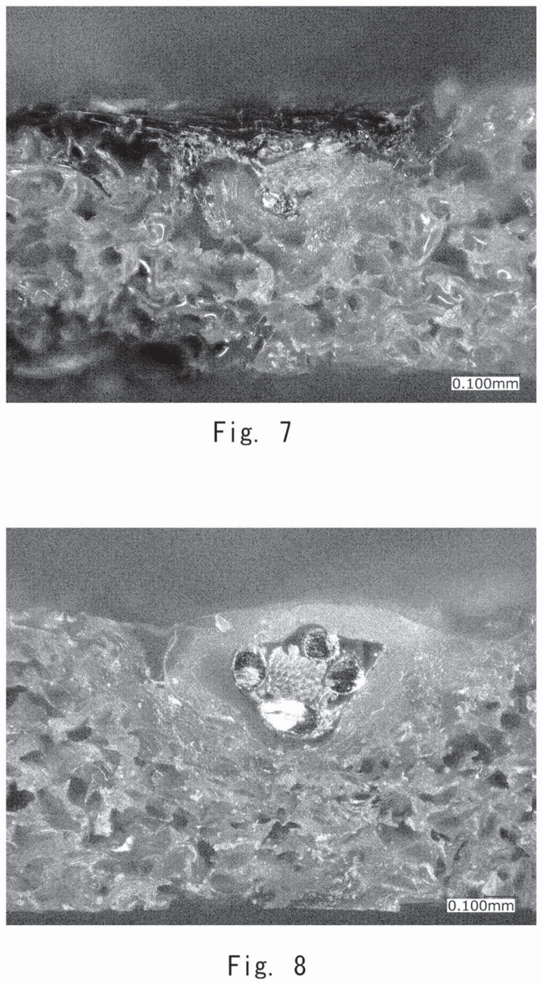

In addition, the needle thread 33 is inserted into the thermal fusion bonding part 19 of the heater wire 11 due to the heat and pressure applied by the press hot plate 57. Accordingly, protrusions due to the sewing thread (needle thread 33) disappear and the surface on which the heater wire 11 is arranged in the planar unit 1 assumes a flat shape. A sectional photograph of the planar unit 1 according to the first embodiment is shown in Fig. 7. As shown in Fig. 7, it can be confirmed that the needle thread 33 is inserted into the thermal fusion bonding part 19 of the heater wire 11.

Furthermore, since the base material 31 and the heater wire 11 are to be fixed by thermal fusion bonding after fastening and fixing the heater wire 11 to the base material 31 by sewing threads (the needle thread 33 and the bobbin thread 35), the flatness of the planar unit 1 can be further increased.

A thickness of the planar unit 1 obtained according to the first embodiment was 2.0 mm, a thickness of the base material 31 in a location where the heater wire 11 is arranged was 1.4 mm, a thickness of the base material 31 in a location where the sensor wire 21 is arranged was 1.4 mm, a thickness of the base material 31 in locations where the heater wire 11 and the sensor wire 21 are arranged was 0.8 mm, and a thickness of the base material 31 in a location where the heater wire 11 and the sensor wire 21 are not arranged was 2.0 mm. In addition, the base material 31 in a location where the heater wire 11 or the sensor wire 21 is not arranged had an apparent density of 160 kg/m3 (in conformity to JIS K 7222) and a hardness of ASKER C 15 (in conformity to JIS K 7312).

The thermal fusion bonding part 19 in the outer circumference of the heater wire 11 and the thermal fusion bonding part 29 in the outer circumference of the sensor wire 21 had deformed and flowed due to the applied heat and pressure and a part thereof had penetrated into a void (pore) of the base material 31. In addition, locations where the heater wire 11 and the sensor wire 21 are arranged were free of irregularities and basically flat even when compared with peripheral thickness. In this case, a variation in thickness within a range of around ±10% can be described as being basically flat and represents a substantially approximately constant thickness. Furthermore, a variation in thickness in or near a range in which the user does not perceive irregularities both visually and tactilely can be described as being basically flat.

In the planar unit 1 obtained as described above, both ends of the heater wire 11 are extracted and connected to a lead wire 37 and the lead wire 37 connects the heater wire 11, a temperature control apparatus 39, and a connector (not illustrated). The temperature control apparatus 39 is arranged on the heater wire 11 and performs temperature control of the planar unit due to heat generation by the heater wire 11. In addition, both ends of the sensor wire 21 are also extracted and connected to another lead wire 37 and a connector (not illustrated) is connected thereto. In addition, a connection with an electric system of a vehicle (not illustrated) is to be made via the connector described above.

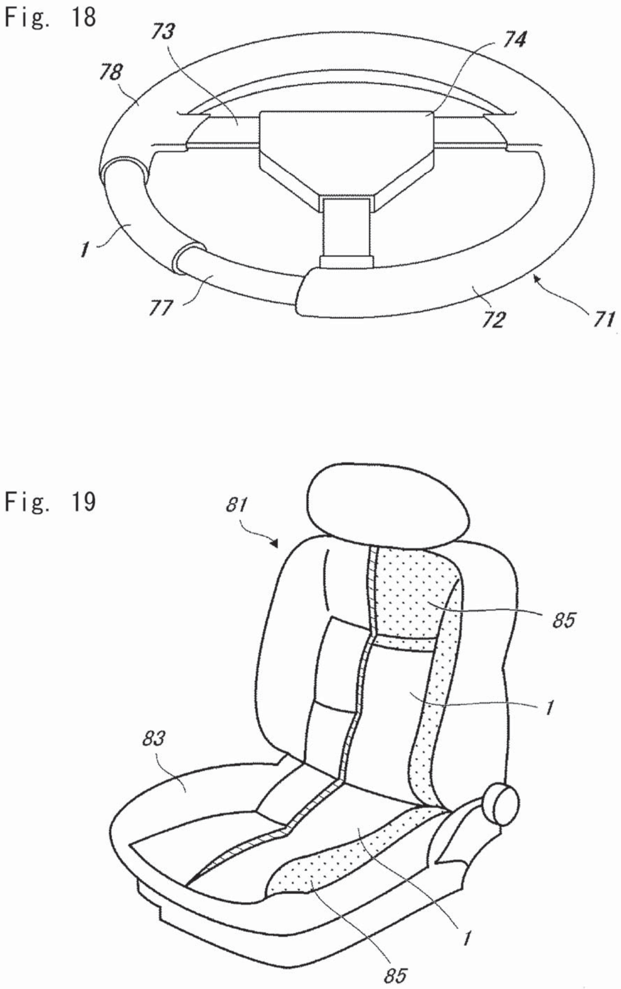

The planar unit 1 configured as described above is installed in a steering wheel 71 in a state such as that shown in Fig. 18. The steering wheel 71 is made up of a wheel part 72, a spoke part 73, and a boss part 74, and the planar unit 1 is to be installed between a wheel core material 77 and a covering material 78 of the wheel part 72.

An adhesion layer (not illustrated) for bonding the planar unit 1 and the covering material 78 of the steering wheel to each other or the planar unit 1 and the wheel core material 77 of the steering wheel to each other is formed in the base material 31. The adhesion layer is preferably formed by forming an adhesion layer solely constituted of an adhesive on a release sheet in advance and transferring the adhesion layer onto a surface of the base material 31 from the release sheet. Accordingly, the adhesive is prevented from penetrating into the base material 31 and the adhesion layer is only formed on the surface of the base material 31.

When installing the planar unit 1 in the steering wheel, any of first to fourth manufacturing processes described below was used.

### (First manufacturing process)

In the first manufacturing process, the planar unit 1 and the covering material 78 were bonded to each other and, in doing so, a surface on a side where the heater wire 11 was arranged and the covering material 78 were bonded to each other. Subsequently, the wheel core material 77 was covered by the covering material 78 to which the planar unit 1 had been bonded.

### (Second manufacturing process)

In the second manufacturing process, the planar unit 1 and the covering material 78 were bonded to each other and, in doing so, a surface on a side where the heater wire 11 was not arranged and the covering material 78 were bonded to each other. Subsequently, the wheel core material 77 was covered by the covering material 78 to which the planar unit 1 had been bonded.

### (Third manufacturing process)

In the third manufacturing process, the planar unit 1 and the wheel core material 77 were bonded to each other and, in doing so, a surface on a side where the heater wire 11 was arranged and the wheel core material 77 were bonded to each other. Subsequently, the wheel core material 77 to which the planar unit 1 had been bonded was covered by the covering material 78.

### (Fourth manufacturing process)

In the fourth manufacturing process, the planar unit 1 and the wheel core material 77 were bonded to each other and, in doing so, a surface on a side where the heater wire 11 was not arranged and the wheel core material 77 were bonded to each other. Subsequently, the wheel core material 77 to which the planar unit 1 had been bonded was covered by the covering material 78.

### (Second embodiment)

The planar unit 1 was obtained by using a polylactide fiber with an outer diameter of 0.165 mm as the needle thread 33 and a 110-dtex low-melting polyethylene yarn as the bobbin thread 35 as the sewing threads in the first embodiment described above but otherwise adopting similar conditions to the first embodiment.

In the second embodiment, the needle thread and the bobbin thread were melted by heat and pressure applied by the hot press-type heater manufacturing apparatus 43 and a sewing thread mark was formed in a vicinity of the heater wire of the planar unit. Since the sewing thread mark is also planarized by the applied heat and pressure, the surface on which the heater wire 11 is arranged in the planar unit 1 assumes a flat shape. A sectional photograph of the planar unit 1 according to the second embodiment is shown as Fig. 8. As shown in Fig. 8, it can be confirmed that the thermal fusion bonding part of the heater wire and the sewing thread mark are planarized.

Each of the planar units 1 according to the first and second embodiments obtained as described above were installed in the steering wheel 71 as shown in Fig. 18 using the methods described in the first to fourth manufacturing processes. The steering wheel 71 was put to practical use in this state and checked for any sense of discomfort. The check was performed by having 10 users grip the steering wheel and perform 10 leftward and 10 rightward steering operations, asking the users whether they felt irregularities, and the number of respondents who experienced a sense of discomfort was studied.

With respect to the planar units according to the first to third embodiments, there were no users who said that they experienced a sense of discomfort regardless of the manufacturing process used to install the planar units in the steering wheel.

In particular, with the planar units 1 according to the above-described first and second embodiments, not only irregularities due to linear bodies such as the heater wire 11 and the sensor wire 21 but irregularities due to sewing threads such as the needle thread 33 and the bobbin thread 35 also do not appear and the planar unit 1 has a flat shape. Therefore, even if the planar unit 1 is assembled to a steering wheel using various methods, irregularities due to the linear body do not appear and a user is prevented from feeling a sense of discomfort during a steering operation. Further, since the base material 31 and the linear bodies such as the heater wire 11 and the sensor wire 21 are to be fixed by thermal fusion bonding after fastening and fixing the linear bodies to the base material 31 by sewing threads, a flatness of the planar unit 1 can be further increased.

Note that the present invention is not limited to the embodiments described above. The first linear body may be used as the sensor wire 21 and the second linear body may be used as the heater wire, or both the first linear body and the second linear body may be used as the heater wire 11, or both the first linear body and the second linear body may be used as the sensor wire 21. Using the heater wire 11 causes the planar unit 1 to be a heater unit and using the sensor wire 21 causes the planar unit 1 to be a sensor unit. The sensor wire 21 can be used as sensors other than a capacitance sensor such as a temperature sensor. As a type of a temperature sensor, a solder wire may be used as the linear body to create an abnormal temperature sensing unit. In terms of sensing radio waves, an antenna wire may be used as the linear body to create an antenna unit. Further, a linear body including both a conductor that provides a heater function and a conductor that provides a sensor function may be used.

Further, conceivably, a shield wire may be used as one of the first linear body or the second linear body. The shield wire is used to prevent an influence of electromagnetic waves from the heater wire 11 on the outside or to prevent an influence of electromagnetic waves from the outside on the sensor wire 21. In general, one or both ends of the shield wire is connected to the ground.

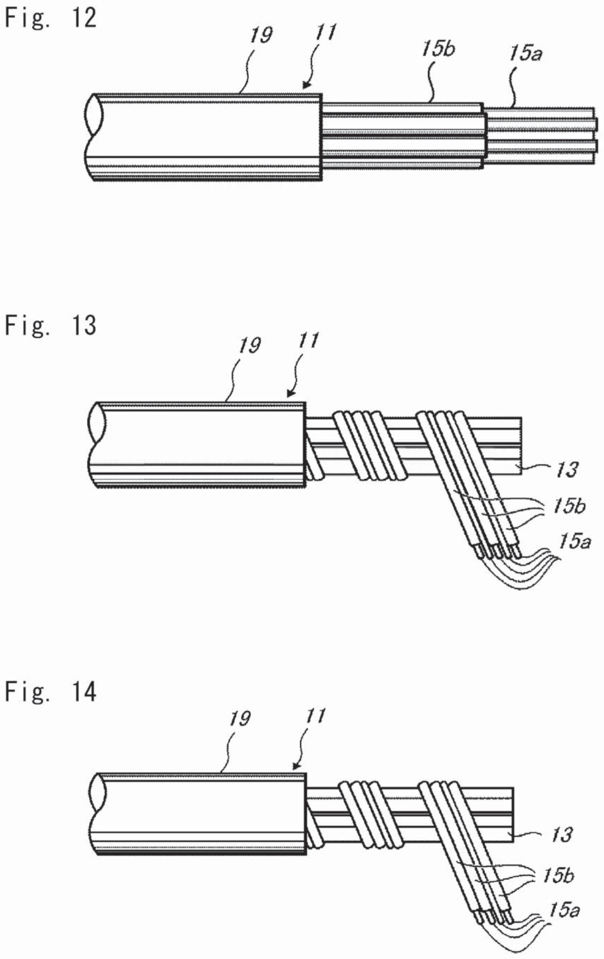

Various conventionally known cord-shaped heaters can be used as the heater wire 11 and, for example, the following configurations can be adopted.
1. As in the embodiment described above and shown in Fig. 9, the heater wire 11 formed by first stranding or paralleling a plurality of the conductor strands 15a having been coated by the insulating film 15b and winding the conductor strands 15a around the core wire 13 and subsequently coating the outer circumference of the conductor strands 15a with the thermal fusion bonding part 19.
2. As shown in Fig. 11, the heater wire 11 formed by stranding a plurality of conductor strands 15a having been coated by the insulating film 15b.
3. As shown in Fig. 12, the heater wire 11 formed by paralleling a plurality of conductor strands 15a having been coated by the insulating film 15b.
4. As shown in Fig. 13, the heater wire 11 formed by alternately arranging conductor strands 15a having been coated by the insulating film 15b and conductor strands 15a not having been coated by the insulating film 15b.
5. As shown in Fig. 14, the heater wire 11 formed by paralleling and arranging conductor strands 15a having been coated by the insulating film 15b in a state where the number of the conductor strands 15a having been coated by the insulating film 15b have been increased as compared to the conductor strands 15a shown in Fig. 13.
6. As shown in Fig. 15, the heater wire 11 in which an insulating film 17 separate from the thermal fusion bonding part 19 is formed.

Heater wires 11 with various configurations other than the above are conceivable. In addition, the heater wire 11 can also be constructed by stranding the core material 13 and the conductor strands 15a. Unless otherwise stated, any component that can be applied to the heater wire 11 can also be applied to the sensor wire 21 and to the shield wire.

Examples of the core wire 13 include fibers configured such that a core material thereof is a monofilament, a multifilament, a span, a fiber material thereof, or an organic polymeric material constituting a fiber material of an inorganic fiber such as glass fiber or an organic fiber such as polyethylene terephthalate and other polyester fibers, an aliphatic polyamide fiber, an aromatic polyamide fiber, or a wholly aromatic polyester fiber, and an circumference of the core material is coated with a thermoplastic organic polymeric material. In a case where the core wire 13 with a heat-shrinkable property and thermal fusibility is used, when the conductor strand 15a becomes disconnected and anomalous heating occur, the core wire 13 melts, becomes disconnected, and contracts. When the core wire 13 contracts, since the conductor strands 15a wound around the core wire 13 follow a movement of the core wire 13, end portions of the disconnected conductor strands 15a separate from each other. Therefore, situations where respective end portions of the disconnected conductor strands 15a come into contact with or become separated from each other no longer repetitively occur. In addition, situations where respective end portions of the disconnected conductor strands 15a come into contact with each other over a small contact area such as point contact no longer occur. As a result, anomalous heat generation is prevented. In addition, when the conductor strands 15a are insulated by the insulating film 15b, the core wire 13 need not necessarily be formed of an insulation material. For example, a stainless steel wire or a titanium alloy wire can be used as the core wire 13. However, since there is a possibility that the conductor strands 15a may become disconnected, the core wire 13 is favorably formed of an insulation material.

As the conductor strands 15a, conventionally-known conductor strands such as a copper wire, a copper alloy wire, a nickel wire, an iron wire, an aluminum wire, a nickel-chromium alloy wire, and an iron-chromium alloy wire can be used, and examples of a copper alloy wire include a tin-copper alloy wire, a copper-nickel alloy wire, and a silver-containing copper alloy wire that contains a copper solid solution and a copper-silver eutectic in a fibrous state. Among these wires, a copper wire or a copper alloy wire is preferably used from the perspective of a balance between cost and characteristics. While copper wires or copper alloy wires include those that are soft and those that are hard, hard wires are particularly preferable as compared to soft wires from the perspective of flex resistance. Note that a hard copper wire or a hard copper alloy wire refers to a wire in which individual metal grains are stretched by a cold working process such as a wire drawing process in a working direction and become a fibrous structure. When such a hard copper wire or a hard copper alloy wire is heated at or above a recrystallization temperature, working strain having occurred inside the metal grains is eliminated and crystalline nuclei to act as nuclei of new metal grains start to appear. Recrystallization in which the crystalline nuclei grow and sequentially replace old crystalline nuclei takes place and a state is created where the grains further grow. A soft copper wire or a soft copper alloy wire is a wire in a state where such grains have grown. While a soft copper wire or a soft copper alloy wire has higher elongation and electrical resistance values but a lower tensile strength than a hard copper wire or a hard copper alloy wire, the flex resistance of the soft copper wire or the soft copper alloy is lower than that of the hard copper wire or the hard copper alloy wire. In this manner, since a hard copper wire or a hard copper alloy wire becomes a soft copper wire or a soft copper alloy wire with low flex resistance due to heat treatment, working with as little thermal history as possible is preferably performed. Note that a hard copper wire is also defined in JIS-C 3101 (1994) and a soft copper wire in JIS-C 3102 (1984), and copper wires with an elongation of 15% or more when an outer diameter ranges from 0.10 to 0.26 mm, an elongation of 20% or more when the outer diameter ranges from 0.29 to 0.70 mm, an elongation of 25% or more when an outer diameter ranges from 0.80 to 1.8 mm, and an elongation of 30% or more when the outer diameter ranges from 2.0 to 7.0 mm are considered soft copper wires. In addition, copper wires include those plated with tin. A tin-plated hard copper wire is defined in JIS-C 3151 (1994) and a tin-plated soft copper wire is defined in JIS-C 3152 (1984). Furthermore, conductor strands 15a with various sectional shapes can be used and, in addition to those with a circular cross section which are normally used, so-called rectangular wires may also be used.

When a sensor wire for temperature detection is to be used as a linear body, the conductor strand 25a is preferably made of a material which is subjected to a large change in a resistance value with a change in temperature. Examples include various metal wires such as a copper wire, a copper alloy wire, a nickel wire, an iron wire, an aluminum wire, a nickel-chromium alloy wire, a copper-nickel alloy wire, and an iron-chromium alloy wire, carbon-fiber wires, and conductive resin wires. Among these wires, wires with a positive temperature coefficient are preferable. A nickel wire and a platinum wire with particularly large coefficients can be preferably used. When the wire has a positive temperature coefficient, since the resistance value increases as the temperature rises, a control method in which an abnormal temperature is determined when the resistance value increases and energization is stopped is to be adopted. Therefore, in the event that a disconnection of the conductor strands 25a occurs, since the resistance value reaches an infinite value, energization is to be stopped in a similar manner to when an abnormal temperature occurs. This is an extremely reliable method when viewed as a safety apparatus.

When winding the conductor strands 15a around the core wire 13, a material with a small amount of springback when winding the conductor strands 15a is favorable among the materials of the conductor strands 15a described above. For example, with a silver-containing copper alloy wire that contains a copper solid solution and a copper-silver eutectic in a fibrous state or the like, while high tensile strength characteristics and superior tensile strength and bending strength are achieved, there is a high likelihood of springback during winding. Therefore, such a material is not preferable since floating of the conductor strands 15a or a fracture of the conductor strands 15a due to excessive winding tension is likely to occur when the conductor strands 15a are being wound around the core wire 13 and habitual twisting is likely to occur after working. In particular, when adopting a mode in which the conductor strands 15a are coated with the insulating film 15b, a restoring force due to the insulating film 15b is to be additionally applied. Therefore, it is important to select a material with a low restoration rate as the conductor strands 15a to compensate for the restoring force due to the insulating film 15b.

The insulating film 15b to cover the conductor strands 15a may be formed by the two layers that are the inner layer 15c and the outer layer 15d as in the embodiments described above, formed by three or more layers, or formed as a single layer. When adopting a plurality of layers, a pyrolysis temperature of a material that constitutes the inner layer is preferably lower than whichever is lower between a melting point and a pyrolysis temperature of a material that constitutes the outer layer. In this case, the inner layer is a layer that is formed on the conductor strands 15a. In addition, since the outer layer need only be on an outer side of the inner layer, another outer layer can be further formed on an outer side of the outer layer or another intermediate layer can be formed between the inner layer and the outer layer.

Examples of the material of the insulating film 15b include various materials such as polyurethane resin, polyamide resin, polyimide resin, polyamide-imide resin, polyester-imide resin, nylon resin, polyester-nylon resin, polyethylene resin, polystyrene resin, polypropylene resin, polyester resin, polybenzimidazole resin, vinyl chloride resin, fluorine resin, and silicone resin. A plurality of these materials may be used in combination or the materials may be blended with various known additives such as a flame retardant or an antioxidant. When combining materials from these resins, a pyrolysis temperature of a material that constitutes the inner layer is set to be lower than whichever is lower between a melting point and a pyrolysis temperature of a material that constitutes the outer layer. As the material of the inner layer, polyurethane resin, vinyl chloride resin, polyacetal resin, polystyrene resin, polypropylene resin, polymethylmethacrylate, polyester resins such as polyethylene terephthalate, and polyvinyl alcohol can be selected. In particular, preferably, the material of the inner layer is a thermoset resin and the material constituting the outer layer is a thermoset resin. In this case, thermoset resins include cross-linkable material. From the perspectives of heat generation characteristics as a heater wire and easy workability of terminals such as soldering, preferably, the material of the inner layer is polyurethane resin or polyester resin and the material of the outer layer is any of polyimide resin, polyamide-imide resin, and silicone resin. In particular, preferably, the material of the inner layer is polyurethane resin and the material of the outer layer is polyamide-imide resin. The polyurethane resin may be modified or blended in various ways as in the case of imide-containing polyurethane or the like.

In addition, the thickness of the insulating film 15b is preferably 3 to 30% of a diameter of the conductor strands 15a. When less than 3%, there is a possibility that sufficient voltage resistance characteristics cannot be obtained and it becomes meaningless to individually coat the conductor strands 15a. When more than 30%, removing the insulating film 15b when crimping connecting terminals becomes difficult and heater wires end up becoming unnecessarily thick.

When paralleling or twisting the conductor strands 15a described above and winding the conductor strands 15a around the core wire 13, paralleling is more preferable than twisting. This is because paralleling results in a smaller diameter of the heater wire and also realizes a smooth surface. Other than paralleling or twisting, the conductor strands 15a can conceivably be braided on the core wire 13.

As the heater wire 11 according to the present invention, a heater wire in which the insulating film 17 is formed on the outer circumference of the conductor strands 15a is also conceivable (for example, refer to Fig. 15). Due to the insulating film 17, in the event that a disconnection of the conductor strands 15a occurs, energization to other members is insulated and, even when sparks occur, heat generation at high temperatures is thermally insulated. When forming the insulating film 17, the insulating film 17 may be formed by extrusion molding or the like or the insulating film 17 having been molded in a tube shape in advance may be overlaid and a method of formation is not particularly limited. When forming the insulating film 17 by extrusion molding, since a position of the conductor strands 15a becomes fixed and friction and bending of the conductor strands 15a due to displacement can be prevented, flex resistance increases and is therefore preferable. A material constituting the insulating film 17 may also be appropriately designed according to a usage mode or a usage environment of the heater wire and examples of the material constituting the insulating film 17 include a wide variety of materials such as a polyolefin-based resin, a polyester-based resin, a polyurethane-based resin, an aromatic polyamide-based resin, an aliphatic polyamide-based resin, vinyl chloride resin, a modified Noryl resin (polyphenylene oxide resin), nylon resin, polystyrene resin, fluorine resin, synthetic rubber, fluoro-rubber, an ethylene-based thermoplastic elastomer, an urethane-based thermoplastic elastomer, a styrene-based thermoplastic elastomer, and a polyester-based thermoplastic elastomer. In particular, a flame-retardant polymer composition is preferably used. A flame-retardant polymer composition described herein refers to polymer compositions with an oxygen index of 21 or higher according to the Determination of Burning Behavior as set forth in JIS-K7201 (1999). Polymer compositions with an oxygen index of 26 or higher are particularly preferable. In order to obtain such flame retardancy, the material constituting the insulating film 17 described above may be appropriately blended with a flame retardant or the like. Examples of the flame retardant include a metal hydrate such as magnesium hydroxide or aluminum hydroxide, antimony oxide, melamine compounds, phosphorus-based compounds, chlorine-based flame retardants, and bromine-based flame retardants. Surface treatment may be appropriately applied to these flame retardants using known methods.

The heater wire 11 can be thermal fusion-bonded to the base material 31 by applying heat and pressure by forming the thermal fusion bonding part 19 on the outer circumference of the heater wire 11. When forming the insulating film 17, the thermal fusion bonding part 19 is formed on the outer circumference of the insulating film 17. As a material that constitutes the thermal fusion bonding part 19, a material similar to the material constituting the insulating film 17 described above can be used. Among such materials, an olefin-based resin that provides superior adhesion with the base material is preferable. Examples of olefin-based resins include high-density polyethylene, low-density polyethylene, ultra-low-density polyethylene, linear low-density polyethylene, polypropylene, polybutene, an ethylene-α-olefin copolymer, and an ethylene-unsaturated ester copolymer. Among these examples, an ethylene-unsaturated ester copolymer is particularly preferable. Since an ethylene-unsaturated ester copolymer is a molecular structure having oxygen in a molecule, combustion heat decreases as compared to a resin with a molecular structure solely constituted of carbon and hydrogen such as polyethylene and, consequently, this leads to suppressing combustion. In addition, since intrinsic adhesion is high, adhesion with the base material is favorable, and since a decline in adhesion when blending an inorganic powder or the like is minimal, various flame retardants can be suitably blended. Examples of an ethylene-unsaturated ester copolymer include an ethylene-vinyl acetate copolymer, an ethylene-methyl (meth) acrylate copolymer, an ethylene-ethyl (meth) acrylate copolymer, and an ethylene-butyl (meth) acrylate copolymer which can be used independently or a mixture of two or more of these copolymers may be used. In this case, "(meth) acrylate" represents both acrylic acid and methacrylic acid. While a material may be optionally selected from these materials, the selected material preferably melts at a temperature equal to or lower than a kickoff temperature or a temperature equal to or lower than a melting point of the material that constitutes the insulating film 15b described above. In addition, an example of a material with superior adhesion with the base material 31 is a polyester-based thermoplastic elastomer. While polyester-based thermoplastic elastomers include a polyester-polyester type and a polyester-polyether type, the polyester-polyether type has higher adhesion and is therefore preferable. Note that when thermal fusion-bonding the heater wire 11 and the base material 31 to each other, adhesion strength between the heater wire 11 and the base material 31 is particularly important. When the adhesion strength is insufficient, since the heater wire 11 detaches from the base material 31 through repetitive use and, as a result, unintended bending is applied to the heater wire 11, there is a possibility of disconnection of the conductor strands 15a. When a disconnection of the conductor strands 15a occurs, not only does the conductor strands 15a no longer play a role as a heater but there is also a risk of sparks occurring due to chattering.

When forming the insulating film 17, a melting point of the insulating film 17 needs to be higher than a melting point of the thermal fusion bonding part 19. Accordingly, deformation of the shape of the insulating film 17 is almost completely avoided and sufficient insulation properties can be maintained even when fusion-bonding the thermal fusion bonding part 19 by applying heat and pressure or the like. The melting point of the insulating film 17 preferably ranges from 215°C to 250°C and the melting point of the thermal fusion bonding part 19 preferably ranges from 100°C to 185°C. In addition, when forming the insulating film 15b on the conductor strands 15a, the melting point of the insulating film 17 is preferably lower than a melting point of the insulating film 15b.

Furthermore, the material constituting the insulating film 17 and the material constituting the thermal fusion bonding part 19 are preferably polymeric materials of a same type. In this case, polymeric materials of a same type are polymeric materials that respectively share a common main chain structure, polymeric materials that respectively share a common functional group, polymeric materials that only differ from each other in molecular weight, copolymers that respectively share a common monomer unit, mixtures that are blended with a common polymeric material, and the like. With such materials, since the insulating film 17 and the thermal fusion bonding part 19 are sufficiently bonded to each other, the heater wire can be prevented from detaching from the base material.

Layers other than the two layers of the insulating film 17 and the thermal fusion bonding part 19 may be appropriately formed on the outer circumference of the conductor strands 15a. In addition, the insulating film 17 and the thermal fusion bonding part 19 are not limited to being continuously formed in a length direction and aspects such as forming in a linear shape or a spiral linear shape in a length direction of the heater wire 11, forming in a dotted pattern, and forming intermittently are conceivable. However, from the perspective of adhesion strength, the insulating film 17 and the thermal fusion bonding part 19 are preferably continuously formed in a length direction.

In addition, with the heater wire 11 obtained as described above, in a flexibility test of performing bending of 90 degrees at a radius of curvature that is six times its own diameter, the number of bending attempts until at least one conductor strand breaks is preferably 20,000 or more.

The base material 31 is also not limited to a foamed polyurethane resin and, for example, various polymeric foams such as a foamed resin sheet made of other material and a foamed rubber sheet are conceivable. In particular, a polymeric foam that includes voids and has superior stretchability is preferable, preferably with hardness thereof being adjusted so that irregularities of the heater wire do not appear on a surface. In addition, methods of adjusting hardness include adjusting a foaming rate, changing a state of bubbles to closed cells or open cells, and using a material with a hardness according to a purpose. The material may be selected from various resins, rubbers, thermoplastic elastomers, and the like such as polyurethane resin, chloroprene rubber, silicone resin, silicone rubber, neoprene rubber, diene rubber, nitrile rubber, natural rubber, polyethylene resin, polypropylene resin, vinyl chloride resin, and ethylene-vinyl acetate copolymer. As the base material 31, in addition to the above, various materials such as nonwoven fabric, woven fabric, paper, aluminum foil, a mica plate, a resin sheet, and a stretched porous material can be used. The base material 31 is preferably flame-retardant and an appropriate mixture of a flame-retardant fiber and a flame retarder is preferably used. In addition, a plurality of base materials 11 can be used by being laminated or the like and, in such a case, a different material or a same material with a different degree of porosity or the like may be used as each base material 31.

As the sewing thread, various known thread materials can be used. Examples include fibers configured such that a core material thereof is a monofilament, a multifilament, a span, a fiber material thereof, or an organic polymeric material constituting a fiber material of an inorganic fiber such as glass fiber or an organic fiber such as polyethylene terephthalate and other polyester fibers, an aliphatic polyamide fiber, an aromatic polyamide fiber, a wholly aromatic polyester fiber and the like, polyethylene fiber, polypropylene fiber, polyvinyl chloride fiber, polylactide fiber, and fluorine resin fiber and an circumference of the core material is coated with a thermoplastic organic polymeric material. When fusion-bonding the linear body by applying heat and pressure, the sewing thread may also melt and form a sewing thread mark or the sewing thread may remain without being melted. When the sewing thread melts, fusion-bonding of the linear body and the base material due to the sewing thread mark can be expected and, when the sewing thread remains, fixing of the linear body and the base material by the sewing thread can be expected. In addition, a sewing method is also not particularly limited. When sewing with a sewing machine for stitching, different materials may be used as the needle thread 33 and the bobbin thread 35 or a same material may be used. For example, conceivably, only the needle thread 33 may be made to melt during fusion-bonding of the linear body by applying heat and pressure. In this case, while the bobbin thread 35 is to remain, since the needle thread 33 has been melted, the bobbin thread 35 can also be removed. Since the step of fusion-bonding by applying heat and pressure is to be performed after the step of sewing and sewing need only provide fixing at a strength comparable to that of temporary fixing, a stitching pitch by the sewing thread is not particularly limited. While fixing strength increases as the stitching pitch is made smaller, since a smaller stitching pitch also lowers production speed, sewing need only be performed at a minimum stitching pitch that allows the pattern shape of the linear body to be maintained. In addition, the stitching pitch may be changed from one location to the next. When the linear body is to be arranged in a pattern shape such as a serpentine shape, only curved portions of the serpentine may conceivably adopt a small stitching pitch to ensure that the serpentine shape remains intact.

In addition, when arranging the heater wire 11 on the base material 31, instead of an aspect in which the heater wire 11 is bonded and fixed to the base material 31 due to fusion-bonding by applying heat and pressure, the heater wire 11 may be fixed to the base material 31 by other aspects. For example, conceivable aspects include an aspect of energizing and heating the heater wire 11 so as to reach a temperature higher than that during normal use and melting the thermal fusion bonding part 19 with the heat to bond and fix the thermal fusion bonding part 19 to the base material 31, an aspect of heating the conductor strands 15a by induction heating and melting the thermal fusion bonding part 19 with the heat to bond and fix the thermal fusion bonding part 19 to the base material 31, an aspect of melting the thermal fusion bonding part 19 made of a thermal fusion bonding material with hot air to bond and fix the thermal fusion bonding part 19, and an aspect of sandwiching and fixing with a pair of base materials 11 while applying heat. Furthermore, when applying heat and pressure to the base material 31, not only the press hot plate 57 but the hot press jig 45 may also be heated. In doing so, a compression rate or, in other words, a degree of porosity of the base material 31 may be changed assuming that temperatures of the press hot plate 57 and the hot press jig 45 differ from each other.

In addition, the positional relationship between the first linear body and the second linear body when they are arranged can be selected in various ways depending on the purpose. When both the first linear body and the second linear body are heater wires, it may be possible to arrange, for example, the first linear body in a pattern that provides excellent instantaneous heating property when it is started up and arrange the second linear body in a pattern that provides excellent thermal uniformity in a temperature equilibrium state. In this case, it is preferable to reduce an area where the first linear body overlaps the second linear body as much as possible. This is because the thickness of this overlapping area becomes large because of the diameters of the two linear bodies and this overlapping area may cause overheating since these two heater wires are located extremely close to each other. On the other hand, when the first linear body is a heater wire and the second linear body is a sensor wire for temperature detection, it is preferable that the first linear body and the second linear body be arranged in such a way that they overlap each other in the same pattern. This is because since a detection strand for detecting temperature is located closest to a heat generation strand, temperature detection can be performed more directly. However, if there is a part where the first linear body and the second linear body overlap each other, it is possible that the first linear body and the second linear body may short-circuit in the above part due to an external force. It is therefore preferable that the pattern of the first linear body and the pattern of the second linear body do not overlap each other.

In addition, as the adhesion layer, for example, various adhesion layers such as an adhesion layer that is made of a polymeric acrylic pressure sensitive adhesive and that does not use a tape base material, an adhesion layer made by forming an adhesive on both sides of a polypropylene film, or an adhesion layer made by forming an adhesion layer on both sides of nonwoven fabric or woven fabric can be used. An adhesion layer with sufficient flame retardancy to pass FMVSS No. 302, Flammability of Interior Materials by itself improves flame retardancy of the planar unit and is therefore preferable. Furthermore, an adhesion layer solely made of a pressure sensitive adhesive is preferable so as not to impair stretchability of the planar unit.

In a planar unit according to the present invention, another planar unit may be arranged in such a way that they overlap each other. For example, it may be possible to create a planar unit in which a first linear body is a heater wire and a second linear body is a shield wire, and arrange, on the side of the second linear body of the planar unit, another planar unit in which only a sensor wire is arranged. With this configuration, due to the presence of the shield wire provided between the heater wire and the sensor wire, electromagnetic waves from the heater wire are interrupted by the shield wire, preventing the sensor wire from being affected.

As applications of the planar unit 1 according to the present invention, the planar unit 1 can be used in various applications besides a steering wheel such as that shown in Fig. 18 described above. For example, the planar unit 1 configured as described above is conceivably embedded and arranged in a vehicular seat 81 in a state such as that shown in Fig. 19. The planar unit 1 in Fig. 19 is affixed to a skin cover 83 or a seat pad 85 and arranged between the skin cover 83 and the seat pad 85. In this case, the planar unit 1 is a heater unit in which the linear body is a heater wire and is to be used as a heater apparatus of the seat. In addition, conceivably, a sensor unit in which the linear body is a capacitance sensor wire may be used to detect a state of seat occupancy.

### Industrial Applicability

As described in detail above, the present invention can prevent a user from feeling a sense of discomfort during a steering operation. Such a planar unit can be suitably used in a steering wheel or a seat that is used in, for example, automobiles, vessels, various transport vehicles, various farm vehicles, and various civil engineering and construction vehicles as a heater unit for heating a steering wheel part or the seat, as a temperature sensor unit for detecting a temperature of the steering wheel or the seat, or as a capacitance sensor unit for detecting a grasped state of the steering wheel or an occupancy state of the seat. In addition, taking advantage of the fact that the planar unit according to the present invention has no irregularities in a linear body part and is flat, the planar unit can be utilized in applications other than a steering wheel and a seat. For example, the planar unit can conceivably be applied to an electric blanket, an electrically-heated carpet, a heated toilet seat, a heater for an antifog mirror, a cooking instrument, a heater for floor panel heating, a heater for clothing, various planar temperature detectors, capacitance sensors, and the like.

This application is based upon and claims the benefit of priority from Japanese patent application No. 2022-208899, filed on December 26, 2022, the disclosure of which is incorporated herein in its entirety by reference.

### Reference Signs List

- 1: PLANAR UNIT
- 11: HEATER WIRE (FIRST LINEAR BODY)
- 13: CORE WIRE
- 15A: CONDUCTOR STRANDS
- 15B: INSULATING FILM
- 19: THERMAL FUSION BONDING PART
- 21: SENSOR WIRE (SECOND LINEAR BODY)
- 23: CORE WIRE
- 25A: CONDUCTOR STRANDS
- 25B: INSULATING FILM
- 29: THERMAL FUSION BONDING PART
- 31: BASE MATERIAL
- 33: NEEDLE THREAD (SEWING THREAD)
- 35: BOBBIN THREAD (SEWING THREAD)
- 71: STEERING WHEEL
- 77: WHEEL CORE MATERIAL
- 78: COVERING MATERIAL
- 81: VEHICULAR SEAT
- 83: SKIN COVER
- 85: SEAT PAD

## Claims

1. A planar unit comprising a base material, a first linear body to be arranged on one surface of the base material, and a second linear body to be arranged on another surface of the base material, the first linear body being one of a heater wire, a sensor wire, or a shield wire, and the second linear body being one of a heater wire, a sensor wire, or a shield wire, wherein
the base material and the first linear body are coupled to each other by a sewing thread, and
a thermal fusion bonding part is formed on an outermost layer of the second linear body and the base material and the second linear body are thermally fused together.

2. The planar unit according to claim 1, wherein
a thermal fusion bonding part is formed on an outermost layer of the first linear body, and
the sewing thread is inserted into the thermal fusion bonding part of the first linear body.

3. The planar unit according to claim 2, wherein a thickness of locations in the base material where the first linear body and the second linear body are arranged is made thin so as to follow shapes of the first linear body and the second linear body, and the sewing thread is inserted into the thermal fusion bonding part of the first linear body and has a basically flat shape.

4. The planar unit according to claim 1, wherein
a thermal fusion bonding part is formed on an outermost layer of the first linear body,
the planar unit includes a sewing thread mark created by melting of the sewing thread that couples the first linear body and the base material to each other, and
the thermal fusion bonding part of the first linear body and the sewing thread mark are planarized.

5. The planar unit according to claim 4, wherein a thickness of locations in the base material where the first linear body and the second linear body are arranged are made thin so as to follow shapes of the first linear body and the second linear body, and the thermal fusion bonding part of the first linear body and the sewing thread mark are planarized and have a basically flat shape.

6. A steering wheel comprising the planar unit according to any one of claims 1-5, a wheel core material, and a covering material, wherein the planar unit is installed between the wheel core material and the covering material.

7. A method of manufacturing a planar unit,
wherein a first linear body is one of a heater wire, a sensor wire, or a shield wire, and a second linear body is one of a heater wire, a sensor wire, or a shield wire,
the method comprising fixing the first linear body onto one surface of a base material by a sewing thread, arranging the second linear body including an outermost layer on which a thermal fusion bonding part is formed on another surface of the base material in a predetermined pattern shape, and applying heat and pressure to the base material, the first linear body, and the second linear body to make a thickness of locations in the base material where the first linear body and the second linear body are arranged so as to follow shapes of the first linear body and the second linear body and fix the base material and the second linear body to each other with the thermal fusion bonding part.

8. The method of manufacturing the planar unit according to claim 7,
wherein the first linear body includes an outermost layer on which a thermal fusion bonding part is formed,
the method comprising causing, when heat and pressure are applied to the first linear body and the second linear body, the sewing thread to be inserted into the thermal fusion bonding part of the first linear body to give the sewing thread a basically flat shape, and fixing the base material and the second linear body to each other with the thermal fusion bonding part.

9. The method of manufacturing the planar unit according to claim 7,
wherein the first linear body includes an outermost layer on which a thermal fusion bonding part is formed,
the method comprising melting, when heat and pressure are applied to the first linear body and the second linear body, the sewing thread and the thermal fusion bonding part, planarizing a sewing thread mark created by melting of the sewing thread and the thermal fusion bonding part to give the sewing thread mark and the thermal fusion bonding part a basically flat shape, and fixing the base material and the first linear body to each other with the thermal fusion bonding part.
